# EUROPEAN PATENT APPLICATION

(11) **EP 2 136 314 A1**
(43) Date of publication of application: **23.12.2009**
(21) Application number: 08290528.2
(22) Date of filing: 09.06.2008
(51) Int. Cl.: G06K 9/00, G11B 27/32, G11B 27/34, G11B 27/10

(54) **Method and system for generating multimedia descriptors**

(71) Applicant: Alcatel Lucent, 75008 Paris (FR)
(72) Inventor: Royer, Julien, 92160 Antony (FR); Delegue, Gérard, 94230 Cachan (FR)
(74) Representative: Vandenbroeck, Josiane Anne Marie

(57) **Abstract**

A method for generating multimedia descriptors includes a step of receiving multimedia content, a step of extracting from said multimedia content a first set of descriptors, a step of analyzing said first set of descriptors, and of selecting at least one type of media analyzer enabling to generate a next set of multimedia descriptors is **characterized in that** said method includes an additional step of comparing said next set of multimedia descriptors with said first set, in accordance with a predetermined rule, and, if the result of said comparison indicates that a new iteration is necessary, said method includes at least one additional iteration step until said comparison step converges or until a predetermined time limit is exceeded.

## Description

The present invention relates to a method and a system for generating multimedia descriptors from multimedia input files. Multimedia descriptors have gained significant interest the last years because of the increasingly larger number of content provided by multiple sources. To obtain efficient and accurate access to this huge amount of content a need for forms of audiovisual information representation that go beyond the simple waveform, sample-based, compression-based (such as MPEG-1 and MPEG-2) or even objects-based (such as MPEG-4) representations has risen. Furthermore, forms of representation that allow some degree of interpretation of the information meaning are becoming necessary. These forms can be passed onto, or accessed by, a device or a computer code. Moreover more and more multimedia applications are based on such metadata describing the audio and video contents.

Media content can be described in terms of video, audio and/or scene content. For the latter, the MPEG-7 standard can for instance be used. The description of the media can be done using different granularity levels from low level descriptions such as colours, textures, histograms... to semantical descriptions such as "replay of the goal action in a football match". In this respect, a lot of effort is currently spent on video and audio semantic analyzers to try to improve the semantic description of the media. Again, in view of the huge amount of media data the generation of a reliable and detailed semantic description of heterogeneous multimedia contents should be done automatically. Existing analysers however are not able to generate reliable and detailed description of a multimedia in real time.

An object of the present invention is therefore to provide a method and a tool for generating multimedia descriptors from input multimedia content, which can be done in real time and delivers more precise and reliable metadata descriptors than the present systems.

According to the invention, this object is achieved due to the fact that the method includes the steps as further specified in the characterizing portion of claim 1.

In this way, the iterative aspect enables to generate more precise descriptors in comparison to the known methods.

By aggregating all previously generated descriptors and by comparing them with the previously generated aggregated sets it can be easily determined whether convergence is obtained or not. In real-time situations, however where timing constraints might be more important, exceeding of a predetermined time limit might also cause the iterations to stop.

Further characteristic features are set out in the appended claims.

The present invention relates as well to a system for implementing such a method and to a programmable device comprising storage means with a software program recordable thereon, the software program comprising instructions which, when executed on the device, cause the device to carry out the steps in accordance to any of the claims 1 to 6.

The above and other objects and features of the invention will become more apparent and the invention itself will be best understood by referring to the following description of an embodiment taken in conjunction with the accompanying drawings wherein:
Fig. 1 shows a high level architecture of the present method and
Fig. 2 shows a more detailed embodiment of a system for realizing the method according to the present invention.

The following merely illustrates the principles of the invention. It will thus be appreciated that those skilled in the art will be able to devise various arrangements that, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

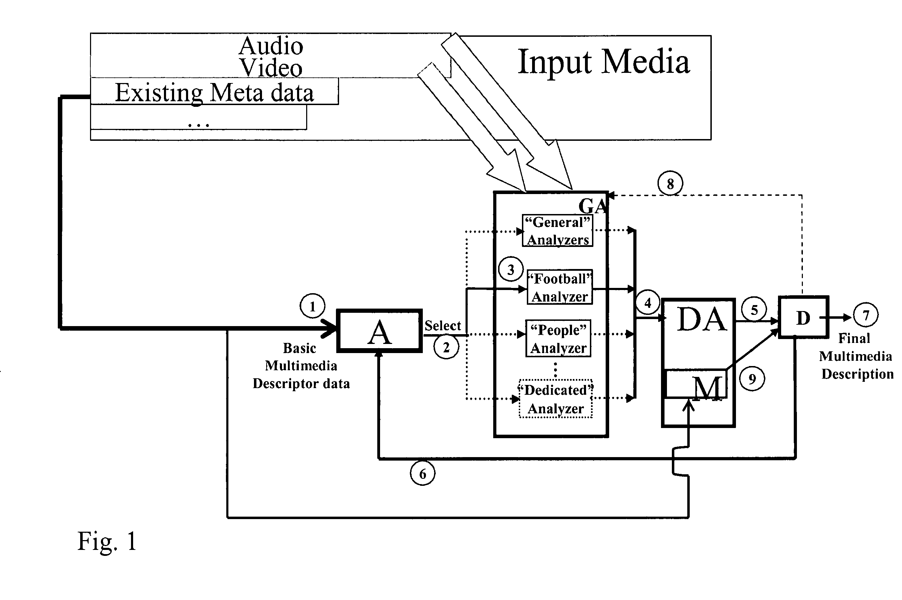

The present invention concerns a method for generating media descriptors from multimedia data such as audio, voice, video, images, graphics, 3D models, etc. Fig. 1 shows the basic building blocks of the method whereby input media comprising raw audio/video/speech... input data, e.g. video and audio data under the form of frames, are provided as input data for the method or to a system for implementing the method. In Fig. 1, this is indicated in by means of the thick grey arrows heading from the raw audio and video data towards a block GA comprising a group of analyzers included in the system. Fig. 1 also shows that the input media data may as well comprise existing metadata, which are provided to another input of the system. Such provision of existing metadata is however optional; other embodiments exist which operate without input of available metadata. Such available metadata can be the result of a previous analysis according e.g. to the MPEG7 standard, or to another method. In case of a video file related to a football match these existing descriptors can for instance be "football match", and/or contain an identification of the place, or time, or teams, or final score, etc. In case these are available, these initial descriptors are used in a selection step, depicted and being performed by a descriptor analyzer A to which these basic descriptors are input. This descriptor analyzer will analyze the descriptors which are input to it, and decide thereupon which of the group of analyzers GA is to be further used for additionally extracting, from the raw input media, additional descriptors. In case no previous metadata were extracted before, the descriptor analyzer will default or automatically point to a "general analyzer" as comprised in the group of analyzers GA. Such a "general analyzer" is adapted to perform a first high-level extraction of the current frame under consideration, for thereby generating a first high-level descriptor or descriptors.

For ease of explanation, we will in the following paragraphs explain the method for the case a video football match is input to the system or method. It is evident that the method is however suitable for extracting/generating metadata descriptors for any kind of input data, comprising any kind of video/ audio/speech, graphic, pictures etc.

While some embodiments are very generic, being able to analyze any type of input media, other embodiments of the system might be more dedicated to specific media, such as video. In the example with an input football match of video, with audio or sound accompanied, the system is able to analyze a sound track as well pictures as video consists of a concatenation of pictures. Generally speaking specific embodiments of the system only need to be able to comprise the analyzers for the specific type of media file or media input data they are designed for.

In the aforementioned case of an input video football match, a general analyzer will try to define if the current image/frame concerns a football match in general, or a football player, or a goal, or whether the ball is present on the screen, or spectators, or whether it concerns a general view of the football match... This can be done, e.g. based on current pattern recognition tools.

Depending on the input media other embodiments comprising another type of general analyzer will be used. Such a general analyzer for extracting metadata from e.g. mp3 compressed audio input data, can be based upon low-level descriptors extraction such as using Temporal Timbral, Instantaneous waveform and power values, fundamental frequency and harmonicity of signals analysis, but they may as well as comprise high level Descriptors extractors for extracting a melody, or comprise even speech to text conversion if words are detected from the songs.

"Still image" resembles video with the difference being that there is only one image to analyze. So, still image analyzers can be used to detect if a person is on the image, if the scene is indoor or outdoor... Text analyzers can be used on image, or audio using different kind of analyzers... based on speech to text recognition for audio, and letters/word detection for images.

Still image analyzers can further be based on pattern recognition tools, as well as text analysers can. In general such pattern recognition tools can be used on still image as well as to analyze text in media (video, image or audio).

In case some metadata were already initially available, e.g. "football players", descriptor analyzer A will further analyze these data, and, based on this analysis select at least one more dedicated analyzer for further analyzing the frame associated with this first basic descriptor. Such an association was made during the generation of the initial metadata, and may for instance be done via timestamps if the MPEG7 standard is used. However another type of association between the initial metadata and the raw data from which the initial metadata is extracted may be possible. This association may be used to synchronize the selection of the analyzers, and the provision of the correct frame to the appropriate analyzer.

In the above example where the initial metadata already indicated "football players", the descriptor analyzer A can then select from a group of dedicated analyzers, the "people Analyzer" relative to people descriptors. To this purpose the descriptor analyzer includes some specific software tools for analyzing the existing descriptors, and, based on this analysis select one or more of the dedicated analysers. Such a dedicated "people analyzer" may further comprise a "face detector analyzer" as well as "player number recognition analyzer" which are then further used to identify the players and in addition track them over the current frame. In this respect a "dedicated analyzer" can be one or comprise a plurality of analyzers: for example a dedicated "football analyzer" should be able to describe a lot of features: goal, public, players, journalist comments... Therefore, the dedicated analyzer may be constituted of a combination of several analyzers, each of them being specialized for searching/extracting a specific feature. In such case several extractions can done successively or in parallel on the current frame. In an example of implementation one or more dedicated analyzers, each of them comprising more than one specific analyzer, can be selected to work in parallel to analyze the media, therefore the system should be able to load as much as possible from the initial description.

In Fig. 1 the provision of the basic multimedia descriptor data to the descriptor analyzer is depicted as "1" , the analysis and selection of a specific dedicated analyzer by the descriptor analyzer as "2" . In Fig. 1 a "football analyzer" is selected as the dedicated analyzer, whose analysis is depicted as "3". The result of the dedicated analysis will be one or more descriptors for the current frame under investigation. These are provided by the dedicated analyzer as further descriptors 4 to a descriptor aggregator DA which aggregates adds them to a list of descriptors extracted for the previous frames so far. In some embodiments, as shown in Fig. 1, also the initial metadata are provided to the descriptor aggregator DA. To this purpose the descriptor aggregator DA may comprise a memory M for storing previously extracted descriptors. For the first frame, the descriptor aggregator DA just aggregates the extracted descriptor(s) from the dedicated analyzer(s) to the initial descriptors, if these were available. For the next frames, the descriptor aggregator takes the most recently extracted descriptors 4 and adds them to the previous ones which were stored in this memory M. In some embodiments the descriptor aggregator is also capable of performing a filtering function, eliminating any redundant data from the received or aggregated descriptor list.

The thus obtained list of aggregated descriptors 5 is output to a differential analyzer D which compares the list of previously extracted descriptors 9 of the previous frames, as stored in memory M, with the latest aggregated list 5. In case some additional descriptor data were still added to the previous list , the differential analyzer will notify the descriptor analyzer A perform a new analysis and thus provides the latest aggregated list 6 comprising complementary multimedia descriptors back to the descriptor analyzer A. This is depicted in Fig. 1 by the arrow from DA to GA, to symbolize the iteration update process. In Fig. 1 D also informs the group of analyzers to take in a next frame , by means of control signal 8. However other embodiments exist wherein a synchronization between A and GA is performed. Another way of implementing relates to GA always having access to the aggregated description and following a scheme of description to extract descriptors one by one according to previous results.

In any case, a next frame is then again analysed, and the resulting descriptors will again be added to the previous ones which were stored in the descriptor aggregator's memory M. In some embodiments, this memory may also be a separate device from the descriptor aggregator; in other embodiments another device for keeping track of the previously extracted or available descriptors may be used, to enable the descriptor aggregator to add the latest extracted descriptors as resulting from the selected dedicated analyser to this list. Optionally an elimination of any redundant descriptor data can be performed by the description aggregator DA.

The thus created list of aggregated descriptors are then again provided to and checked in the differential analyzer A, e.g. by comparing the list stored in the memory so far, with the new created aggregated list.

If the result of the differential analysis indicates that still some additional descriptors were added, the whole procedure will start over again by means of additionally selecting, based on the newly generated list of aggregated descriptors, a suitable dedicated analyser, for analysing the next frame until no further finetuning is obtained. In some embodiments also some time constraints may impose the iteration to come to an end. In any case the resulting analysis will be more and more finetuned until a detailed set of precise descriptors 7 will result for a set of frames, generally constituting one scene. However any arbitrary set of frames can be analysed; start and end of scene detection is an option to determine descriptors for one scene.

It may be remarked that parallel or successive extraction can be done on a current frame and on successive frames. Using the Differential Analyzer it is possible for example to consider from an image to another whether a person has been already detected or not on the current scene and therefore to track them all over the media (updated position in the image).

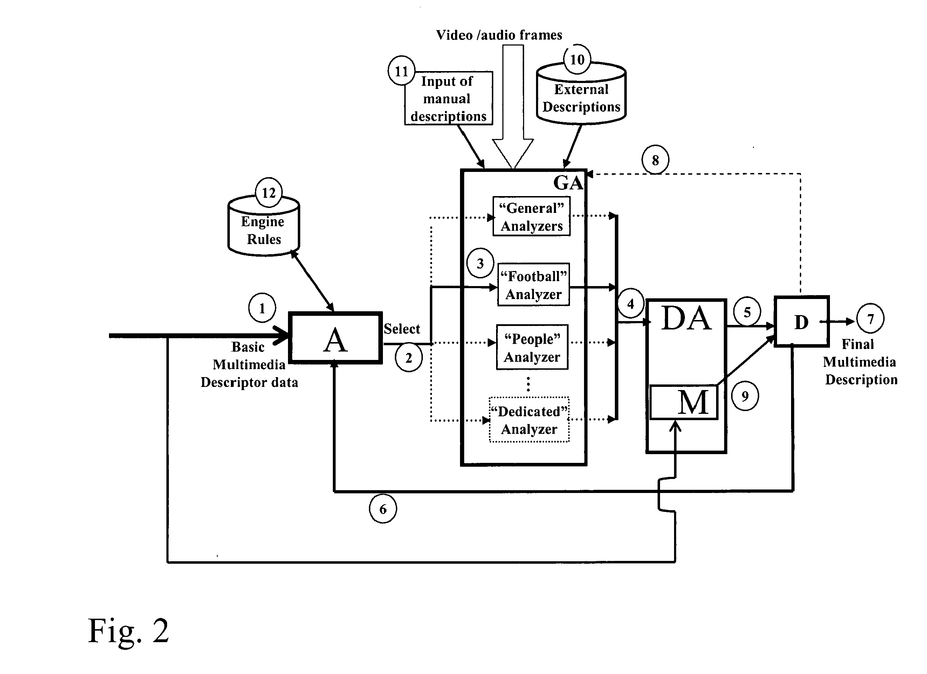

Referring to Fig. 2 giving a more detailed embodiment for realizing the present invention, again available metadata 1 are taken as input to a descriptor analyser A. Again this Descriptor Analyzer A , is in charge to determine the next type of analysis to trigger. In the shown embodiment this descriptor analyzer analyzes the given input metadata by using an internal rule engine. The rules used for this internal rule engine are provided to the descriptor analyser by a rule server or rule database 12. The rules itself serve to define how to improve an incomplete semantic description being input to the descriptor analyzer. In the aforementioned example some rules may be :
If people were detected on the current frame , and the first descriptors were related to "persons" , call face detector analyzer.
If first descriptors were related to a "football" , call "football analyzer".

Using such a rule engine enables to dynamically add new-dedicated analyzers. By using plugin technology for example it is possible to add a new dedicated analyzer to the platform. Added relative rules will link input semantic concept (high level descriptors) to the new available dedicated analyzer.

In yet other embodiments some rules can even be created when an analyzer is added (in order to link the new analyzer in the system). Rules can be created manually or automatically using semantic description as an example. In other embodements some rules can be modified or removed from the system when an analyzer is removed from the system.

However other embodiments of such rule engines are also possible.

According to the rules as provided by the Rules engine 12, the Descriptor analyzer A then selects which kind of media analyzers will be used to generate further multimedia description (for example, football Analyzer will be selected to search for players, ball, goal zone, public view,..) as indicated by the arrow 2 leaving the descriptor analyser and pointing to the "football analyser" 3.

As already explained, apart from this "football analyser" many other analysers can be selected such as "people analyser"or other "dedicated analyser". Dedicated analyzers can improve the description knowing the context by implementing specific audio or video processing or by collecting external data 10, for instance from an external web site or by requesting manual information 11. Collecting external data relates to finding extra information on internet : in an advanced version of "face recognition analyzer" for example, if a person which has been announced to be present on the media (video, picture...) is not present on the face database of the system, it would be possible for the system to request for the picture of his face. It will be therefore possible to detect/track him in the media...

"Requesting manual information" 11 concerns the possibility to link the system with a user interface for allowing the user to "complete", "modify"... the description generated by the system...

The result of the further analysis, in the shown example by the "football analyser" is a further or next set of media descriptors 4. In the example of a football match this can comprise the following information : Main actions of the football match temporarly specified (goals, corners, red card...), as much as possible football players recognized during the match, etc. This further set comprising "Complementary Multimedia Description" generated by the selected media analyzer is sent to Description Aggregator DA which, in case initial metadata were present, can be initialised on the first iteration with the initial metadata or baisc multimedia descriptor data, if the original organisation of media description, the format, etc. well correspond with our system. However, some formats such as the MPEG-7 format allow to describe a scene in a different way. In such cases it is possible that the system has to adapt the original input description information to required the correct output description format.

During the first time this first set is then completed with the dedicated descriptors 4 such as to generate an aggregated set 5. The purpose of the "Description Aggregator" DA is to aggregate descriptions generated by the media analyzer with an existing description of the media. Following the MPEG-7 standard for example, it is possible to finalize, remove redundancies or add new description schemes and descriptors as needed in the final description. Some embodiments of description aggregators semantically analyze input descriptors and remove duplicated information and aggregate information which start at the same timestamp, happen at the same location in the scene, etc.. Again in some embodiments such a descriptor aggregator DA may include a memory, or use input data from a memory keeping track of the latest aggregated data. However other embodiments are also possible.

This aggregated set 5 is again delivered to the Differential Analyzer D which analyzes the differences between the previous media description and the newly generated completed description .The Differential Analyzer D will further decide whether a new iteration is needed or not. In case no difference are observed between new and previously generated sets of descriptors, the differential analyzer will stop the present iteration on the present frame and wait for next frame..

Until now this differential analyser was described more or less as a comparator, but of course other embodiments are possible. In some embodiments the differential analyzer can be based on "update notifications" if description nodes have changed (added, removed, updated...) on the current description of the media. Another way is to compare the previous state of the description with the updated state in order to detect if nodes have been changed.

In the case of offline analysis , the media is analyzed until the system is not able to generate any more different descriptors. In such situations timing constraints are generally not important.

However, in a real-time context the Differential Analyzer also has to check whether any new iteration is still justified in view of the imposed timing constraints related to the streaming media (e.g. the time between successive frames). Due to these timing constraints for real time analysis of video for example, the current frame is to be analyzed before the next one. Therefore, the differential analyzer also has to evaluate whether the system has still sufficient time to execute another iteration as the analyzer's execution times are often known. It is also possible to also set an iteration counter or an automatic "timing event" settled in function of the multimedia frame rate as an example, to limit the number of iterations. Generally speaking the time analysis should be less than the time between two consecutives frames to keep the real time analysis possible.

In case the differential analyser decides that the aggregated set of multimedia descriptors is not sufficient according to some predetermined criteria , the result will be that another iteration step is to be done on the next frame, and the aggregated description is sent back to the Descriptor Analyser A to execute a new analysis iteration. On the next iteration, the media description is complemented with the additionally generated description and will be considered as the "new" input media description, until the algorithm from the differential analyser D finally converges or until the maximum limited number of iterations is reached which is itself related to a predetermined time limit.

Some systems will iterate until they will not be able anymore to "choose" or select which dedicated analyzers to execute on the media to describe. Final multimedia descriptors are provided as output 7.

While the principles of the invention have been described above in connection with specific apparatus, it is to be clearly understood that this description is made only by way of example and not as a limitation on the scope of the invention, as defined in the appended claims.

## Claims

1. Method for generating multimedia descriptors, said method including a step of receiving multimedia content, a step of extracting from said multimedia content a first set of descriptors, a step of analyzing said first set of descriptors, and of selecting at least one type of media analyzer enabling to generate a next set of multimedia descriptors
**characterized in that**
said method includes an additional step of comparing said next set of multimedia descriptors with said first set, in accordance with a predetermined rule, and, if the result of said comparison indicates that a new iteration is necessary, said method includes at least one additional iteration step until said comparison step converges or until a predetermined time limit is exceeded.

2. Method according to claim 1 further including a step of aggregating said first set of descriptors with said next set and any further generated sets, thereby generating an aggregated set.

3. Method according to claim 2 wherein , during said comparison step said aggregated set is compared with a previously generated aggregated set.

4. Method according to claim 3 wherein said comparison step converges when the aggregated set equals the latest generated aggregated set .

5. Method according to any of the claims 1 to 4 wherein said analyzing step is based upon rules provided by a rule engine.

6. Method according to any of the previous claims 1 to 5 wherein said at least one type of media analyzer is selected from a group of analyzers (GA).

7. Method according to any of the previous claims 1 to 6 wherein said predetermined time limit is related to a rate of receiving said multimedia content.

8. System for generating multimedia descriptors, said system being adapted to receive multimedia content, and to extract from said multimedia content a first set of descriptors, said system being further adapted to analyze said first set of descriptors, and to select at least one type of media analyzer enabling to generate a next set of multimedia descriptors
**characterized in that**
said system is further adapted to compare said next set of multimedia descriptors with said first set, in accordance with a predetermined rule, and, if the result of said comparison indicates that a new iteration is necessary, said system is further adapted to perform at least one additional iteration step until said comparison step converges.

9. System according to claim 8, further being adapted to perform any of the steps as described in claims 2-7.

10. Storage means including instructions for implementing the method as described in any of the claims 1-7.

11. Programmable device comprising storage means with a software program recordable thereon, the software program comprising instructions which, when executed on the device, cause the device to carry out the steps in accordance to any of the claims 1 to 7.

## Amended claims

### Amended claims in accordance with Rule 137(2) EPC.

**1.** Method for generating multimedia descriptors, said method including a step of receiving multimedia content, and of selecting at least one media analyzer enabling to generate a t at least one multimedia descriptor, further including a step of aggregating all multimedia descriptors generated so far, resulting in an aggregated set of multimedia descriptors
**characterized in that**
said method includes an additional step of comparing said aggregated set of multimedia descriptors with a previously generated aggregated set and, if the result of said comparison indicates a difference between the aggregated set and the previously generated aggregated set, said method includes at least one additional iteration including a step of analyzing the aggregated set of descriptors on the basis of which the selection of said at least one media analyzer for extracting said multimedia descriptors is performed .

**2.** Method according to claim 1 wherein said analyzing step is based upon rules provided by a rule engine.

**3.** Method according to claim 1 or 2 wherein said at least one media analyzer is selected from a group of analyzers (GA).

**4.** Method according to claim 3 wherein said group of analyzers comprises general analyzers and dedicated analysers.

**5.** Method according to claim 4 wherein said dedicated analyzers are further adapted to request manual information and/or to collect external data concerning the media to be analyzed.

**6.** System for generating multimedia descriptors, said system being adapted to receive multimedia content, and to extract from said multimedia content a first set of descriptors, and to select at least one type of media analyzer enabling to generate a next set of multimedia descriptors , said system being further adapted to aggregate said first set of descriptors with said next set, thereby generating an aggregated set**characterized in that**
said system is further adapted to compare said aggregated set of multimedia descriptors with said a previously aggregated set, in accordance with a predetermined rule, and, if the result of said comparison indicates a difference between the aggregated set and the previously generated aggregated set, and if no predetermined time limit is exceeded said system is further adapted to perform at least one additional iteration step including a step of analyzing the aggregated set of descriptors on the basis of which the selection of said at least on type of media analyzer is performed.

**7.** System according to claim 6, further being adapted to perform any of the steps as described in claims 2-5.

**8.** A computer program adapted to perform the method as described in any of the claims 1-5.

**9.** A computer readable storage medium comprising instructions to cause a data processing device, to carry out the steps in accordance to any of the claims 1 to 5.
